# EUROPEAN PATENT SPECIFICATION

(11) **EP 3 735 875 B1**
(45) Date of publication and mention of the grant of the patent: **12.04.2023**
(21) Application number: 19173307.0
(22) Date of filing: 08.05.2019
(51) Int. Cl.: A47J 31/46

(54) **FULLY AUTOMATIC COFFEE MACHINE WITH MOTORIZED MULTI-WAY VALVE**
KAFFEEVOLLAUTOMAT MIT MOTORISIERTEM MEHRWEGEVENTIL
MACHINE À CAFÉ ENTIÈREMENT AUTOMATIQUE COMPORTANT UNE VANNE MULTI-VOIES MOTORISÉE

(43) Date of publication of application: 11.11.2020
(73) Proprietor: BSH Hausgeräte GmbH, 81739 München (DE)
(72) Inventor: Einsiedler, Thomas, 83278 Traunstein (DE); Hacker, Robert, 83342 Tacherting (DE); Marchner, Maximilian, 83342 Tacherting (DE)

(56) References cited:
- EP-A1- 1 106 126
- EP-A1- 2 807 961
- EP-A1- 3 289 936
- EP-A2- 1 916 459

## Description

The invention relates to a hot beverage machine, in particular a fully automatic coffee machine, also a fully automatic coffee machine for household purposes. Such coffee machine usually comprises a water container, a heater, a pump, a control unit dedicated to control the process of beverage preparing, a brewing unit and a multiple-way valve disposed downstream of the heater and operable to supply hot water or hot steam produced by said heater to individual preparation devices such as a coffee brewing unit, a foaming nozzle, or release of hot steam, or the like.

The multi-way valves employed in said devices are usually 3-way or more-way valves, therefore they are convenient for either supplying the hot water to a brewing coffee unit of the apparatus or for supplying hot steam to the foaming nozzle for heating and frothing/foaming milk for drinks as a cappuccino also as the subsequent preparation of cappuccino. In the next working position multi-way valve can open a channel leading usually to a drip tray or the like to thereby permit the steam in the heater to expand without supplying hot water or hot steam to any of the preparation devices, and to ensure safety usage by preventing personal injury resulting from contact with hot medium. In order to be able to automatic change positions of the multi-way valve, said valve can be driven by an electric motor. Said valves also comprise a detection unit which is used to detect the right position of the valve and to deliver a corresponding signal to the control unit upon. To provide durability and resistance to difficult working conditions, said multi-way valves are usually a ceramic valves, comprising ceramic discs mounted in sealing engagement with and rotatable relative to one another.

The document EP2807961A1 discloses a beverage machine, in particular coffee machine for household purposes, which comprises a heating device, a brewing chamber, a hot water spout, and a motor-driven multi-way valve that switches a fluid flow at least between the heater on the one hand and the brewing chamber and the hot water outlet on the other hand. The valve also comprises a detection unit for detecting a position of the valve. The detection unit is formed as a plurality of circumferentially distributed markers on the movably part of the valve and cooperates with the markers detection unit for preparing a signal, for controlling the positioning of the multi-way valve.

The document US4632024A discloses coffee machine on which a boiler, heated by an electric heating source, is connected by a top and bottom pipe respectively to two inlets on a distribution chamber with a manually driven multi-way valve with a detection unit, the latter having an exhaust outlet, a water outlet connected to a ground coffee filtering cup, and a steam outlet. A selecting device is mounted in mobile manner inside the said distribution chamber for enabling selective communication between the water and exhaust outlets, while at the same time disabling the said heating source, between the bottom pipe and the water outlet, and between the top pipe and the steam outlet.

The document EP1300105A1 discloses an espresso machine which is provided with a rotating ceramic disk valve as a selective water-steam distributor that is in a driving connection with a drive motor, and a control device for controlling the drive motor. To increase the precision of the rotational-angle setting, a Geneva gear is incorporated into the driving connection between the drive motor and the rotating ceramic disk valve, with the gear setting the rotating ceramic disk valve in make-and-break cycles. The control device shuts off the drive motor after at least one make-and-break cycle of the Geneva gear.

The document EP1106126A1 discloses a machine having a water supply unit, a water receiving unit, and water channels for the water supply and channels for the received water. There is a water distributor for selectively authorizing the passage of water from the water supply towards the receiving channels. The distributor has a rotating plate activated by an electric motor, this plate having a recess configured for selectively connecting, according to the angular position of the plate, the exit ends of the water supply channel with the inlet end of the receiving channel. Said machine also comprises at least one power-supply switch for the electric motor, and in that the rotary plate is secured to a shaft on the periphery of which is formed at least one cam for actuating the said switch, such that the power supply to the motor is cut off as soon as the said cam reaches an angular position corresponding to an angular datum position of the rotary plate, determined by the position of the selection member.

So, achieving an exact rotational-angle position of the rotating ceramic disk of the disk valve, and thus a fast, exact alignment of the openings in the disk valve that are to be connected to one another, is usually desirable for assuring reliably uniform flow quantities and avoiding interfering flow noises, which may occur at hole edges if the openings are not perfectly aligned. Known solution, providing the necessary precision of angle adjustment are expensive and complicated, usually requires usage of additional elements, on other hand cheap solutions are unreliable and imprecise.

The object of the present invention is to provide a hot drinks machine, in particular a fully automatic coffee machine having a rotating a ceramic disc valve as a selective water/steam, etc. distributor, such that the precision of the adjustment of the rotational angle of the ceramic disc valve is improved in a simple, cost-effective manner, and easier start of electric motor driving the valve is provided.

In accordance with the present invention, there is provided a hot beverages machine, in particular fully automatic coffee machine for domestic purposes comprising a heating device, a brewing chamber, a hot water discharge, and a motor driven multi-way valve. The motor driven multi-way valve has an inlet line with an inlet port, and at least one outlet port and a housing having a disc carrier with a bottom surface and with openings, creating an inner space for receiving and retaining ceramic valve discs which are arranged in sealing engagement with each other, and can be adjusted with respect to one another, namely at least one fixed distributor disc and at least one adjustable control disc, with respect to the housing. For the fine adjustment of the mutual position of said valve regulation means, especially mutual position of the ceramic discs, it comprises a driven adjustment element, with a plurality of markers having a working areas, and which are distributed around the periphery of the adjustment element and an initialization identifier which differs therefrom. The valve is controlled by a control device using a detection unit which interacts with the markers, and with the initialization identifier, especially the detection unit interacts with the working area of them, therefore the working area of the marker or the initialization identifier is a portion of the marker or initialization identifier which interacts with the detection unit. As a result of interaction, the detection unit signals detected markers, and detected the initialization identifier to the control device, where the control signal is evaluated. The working area of at least one the marker or the initialization identifier has a cam shape profile, with a step changing cam surface, resulting in a step change of the control signal. While the adjustment element with markers rotating with respect the detection unit, at the point where the working area abruptly is changed also the control signal changes the state. The control signal can have two different and easy to recognize states by the control device and the change of the control signal from a one state to another state signals the control device about the achievement of a specific position of the adjustment element. The step changing cam surface of the working area causes that it is possible in easy and precise manner to determine a position of the adjustment element because the control signal changes at a point where the working area steeply changes. Said step changing cam surface also causes that the point of change the control signal is less dependent on the tolerance of the making of the marker.

As detection unit which can interact with the markers or the initialization identifier interact, different systems and principles can be used. In principle, the detection unit which emit a first signal when the marker or initialization identifier is detected and generate a different signal or no signal when the marker or initialization identifier is not detected. For example, mechanically actuated switched, photoelectric sensors or magnetic switches which know at least the operating states "low" and "high" or "Off" and "On" and can output corresponding signals when the marker is detected. On the other hand, in the case of the detection of the marker, a further signal can be emitted that differs from the signaling lack of the marker.

For more complex detection units may be required, the other operating state or the switching state. In contrast, according to an advantageous embodiment of the invention, the differentiation of the marker from the initialization marking can be achieved by a time duration of the detection or the activation or deactivation of the detection unit. This allows a simple detecting of a period of time between two different state, what causes that such procedure of detection is technically simple and inexpensive to implement. Thus, as the detection unit is used a relatively simple switch, such as a micro-switch, which knows only the switching positions "Off" and "On" and whose switching position time is detected. Based on the duration of the respective switching position is possible to distinguish the initialization identifier from the marker.

Advantageously, the micro-switch or other two state switch acts as the detection unit and is adapted to detect the markers and the initialization identifier which have three dimensional form. A variation in the design of the markers and the initialization identifier is possible, if such variations of the markers can be still detected by the detection unit.

By way of example, the markings with respect to the initialization identifier can have a greater width or length, so that the detection unit is activated for a longer time during the detection of the markers by the method of the adjusting element than when an initialization marking is detected. Advantageously the step edge extends radially inwardly between the plateau portion of the markers and the periphery of the adjustment element.

In preferred embodiment the hot beverage machine comprises the switch which acts as the detection unit, and said switch has a switch actuator which extends outwardly from its body and towards the markers, wherein the markers at least partially and temporally stay in the contact with the switch actuator to actuate the switch, which causes changes in the state of the switch when the adjustment element rotating.

Advantageously the hot beverage machine has the switch as a detection unit and cam shaped both as markers and also as an initialization identifier and with a longer length of the initialization identifier in the peripheral direction of the adjustment element compared with a length of the markers, therefore it's easy to identify the initialization identifier among the markers. The adjustment element is being rotated with constant speed, therefore measuring the time when the switch is actuated by the markers allows to determine the initialization identifier, because this time is clearly longer because of longer length of the initialization identifier. Alternatively, the markings with respect to the initialization identifier can have a greater width or length, so that the detection unit is activated for a longer time during the detection of the markers by the method of the adjusting element than when an initialization marking is detected.

In preferred embodiment the hot beverage machine comprises the switch which is used as the detection unit which can take two states: open or closed, wherein changes of the state of the switch is caused by actuating the switch actuator by the markers. Such configuration simplifies the system and it makes it more reliable.

Advantageously the hot beverage machine has a device for recording a duration of the control signal at the time when the marker or the initialization identifier are detected. The device for registering a signaling duration allows to register a signaling duration of the detection unit during the detection of the marker or the initialization identifier for next steps of procedure of identification a position of the adjustment element.

According to the invention, the hot beverage machine has the initialization identifier and the markers having a cam working surface which varies in shape from a rising edge, then a plateau portion and a step edge, abruptly falling. When the switch actuator is sliding on the plateau portion, the control signal state doesn't change, then because of the step edge the switch actuator lose the contact with the marker and the switch change the state. Therefore the step edge within the cam working surface is ease to detect because of the change state of the switch, what causes that the change in the control signal, so that a complete coverage of the openings can be calculated and achieved. A lack of accuracy could lead to a partial overlap of the breakthroughs and thus to an undesirably reduced flow through the multi-way valve. Advantageously the step edge extends radially inwardly between the plateau portion of the markers and the periphery of the adjustment element, therefore the switch actuator can immediately loos the contact with the markers what favors the precise determining the position of the adjustment element.

According to an advantageous embodiment of the invention, the hot beverage machine has radially projecting cams defining the initialization identifier and as markers and a micro-switch with a translationally displaceable switching pin as the switch actuator. Each cam has the rising portion, the plateau portion, and a step edge portion which are placed circumferentially on the adjustment of the multi-way valve. The markers are separated by longer or shorter gaps. The working area of cams interacts with the switch actuator of the switch. Therefore the adjustment element with markers can be inexpensively produced, for example, as a plastic injection molded part and clearly define an actuation period of the detection unit by the displacement of the switching pin of the detection unit.

The object of the invention is achieved by a method for operating a hot beverage machine for household purposes according to independent claim 10.

The multi-way valve employed in the hot beverage machine are very convenient for controlling the flow of the hot water or steam or opening a channel leading usually to a drip tray or the like to release a residual water or steam from the system. The individual function of the multi-way valve depends on the position of the adjusting element. The position of the adjustment element is controlled by the markers. Arrangement of the markers on the adjustment element, especially position of its step edge of the markers determines the point where the control signal is changed what can be used for stopping the rotation of the adjustment element to arrive right position or alternatively for achieving calculated position, where the right position of the multi-way valve is arrived. Abruptly falling the step edge of the marker causes a sudden loss of influence the marker on the detection what causes the change of the control signal, therefore said position is easy to detect by inexpensive means. After arriving the desired position of the adjustment element the switch actuator is not in with mechanical contact with any markers 6 neither the initializations identifier, what provides easier start of electric motor, therefore there can be used electric motor of less power.

Further benefits and advantages of the present invention will become apparent after a careful reading of the detailed description with appropriate reference to the accompanying drawings.

In the drawings:
Fig. 1 is a plan view of the adjusting element in accordance with the preferred embodiment of the present invention,
Fig. 2 is a perspective view of the motor-driven multiway valve with the adjustment element as shown in Fig. 1.

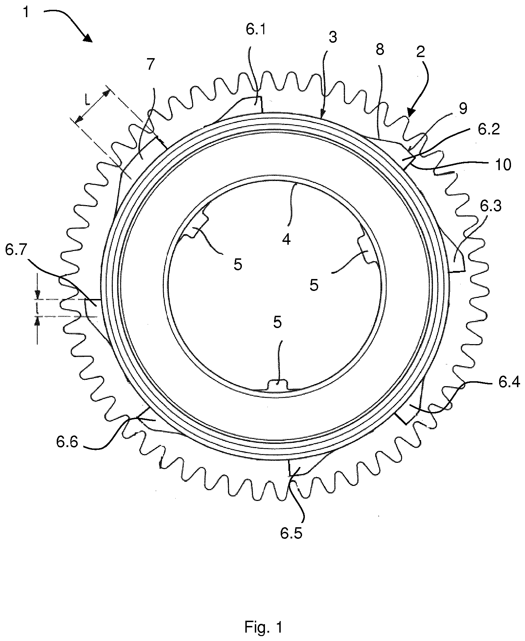

Referring to the drawings and initially to Fig.1, a rotationally symmetrical adjustment element 1 of a motor-driven multi-way valve 11 in accordance with preferred embodiment of the present invention, comprises on its periphery a gear wheel 2 with teeth for driving the adjustment element 1 and a cam wheel 3 coaxially disposed with respect to the gear wheel 2. The gear wheel 2 and the cam wheel 3 are ring-shaped. The cam wheel 3 carries on its inner side 4 three radially inwardly extended protrusions 5 as a carrier for a not displayed a ceramic disc of the multi-way valve 11. The outside portion of the cam wheel 3 is equipped with radially outwardly projected a seven markers numbered from 6.1 to 6.7 and an initialization identifier 7. The markers 6.1 ... 6.7 with the initialization identifier 7 are separated from each other by gaps. Each markers 6.1 ... 6.7 and initialization identifier 7 are cam shaped, with a rising edge 8, a plateau 9, and step edge 10 where the working area of the abruptly radially inwardly falling. The working area is a portion of the markers 6 or a portion of the initialization identifier which interacts a detection unit 23. The plateau 9 substantially extends parallel to the outer periphery of the cam wheel 3. The plateau 9 of each marker 6.1 ... 6.7 has the same length "I", and the plateau 9 of the initialization identifier 7 has a length "L", wherein the length "L" is longer than the length "I". All markers 6 and the initialization identifier 7 are provided with a rising edge 8 with the same lengths and the same inclinations, what results in that the plateaus 9 of the markers 6 and initialization identifier 7 protrude from the cam wheel 3 on the same height. All markers 6 and the initialization identifier 7 are provided with a rising edge 8 with the same length and the same inclination, what results in that the plateaus 9 of the markers 6 and initialization identifier 7 protrude from the cam wheel 3 at the same height.

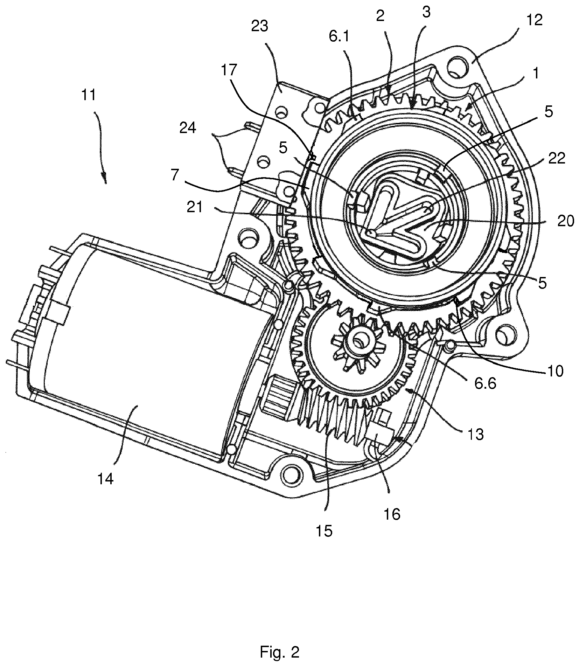

Referring to Fig. 2 a motor driven multi-way valve 11 in accordance with the preferred embodiment of the present invention is shown. The motor driven multi-way valve 11 comprises a housing 12. Therein, the adjusting element 1 which is mechanically coupled via a gearbox 13 with an electric motor 14. The electric motor 14 on the output side has a worm 15 which transfers generated torque to the gearbox 13, then to the adjustment element 10 causing a rotation of the adjustment element 1. Inside and below the adjusting element 1 is a concave recess for receiving a set of ceramic discs (not shown on this figure) has on its lower portion an arrow-shaped water guide 22 equipped with an opening 21. The opening 21 is in a fluid communication with a fluid system of a hot beverage machine and is placed downstream of a heating device. From there, the multi-way valve 11 receives a hot water or hot steam, which can be distributed over the opening 21 and the arrow-shaped recess 22 and next via the set of the ceramics discs to the suitable outlet port. The set of ceramics discs comprises three ceramics disc, and one of the ceramic disc can be rotated by the adjustment element 1 using the protrusions 5 with respect to the housing 12 when the adjustment element 10 is rotated. The multi-way valve 11 also comprises a two state switch which operates as a detection unit 23. The switch 23 comprises a switch actuator 17 which extends toward the markers (6) to interact with them. The switch 23 also comprises two terminals 24 for electrically connecting to a control device (not shown on this figure). The switch actuator 17 interacts with the markers 6 and the initialization identifier 7 and makes electrical contact between the terminals 24. The electric motor 14 drives the adjusting element 1 via the gearbox 13. When the multi-way valve 11 is put into operation, an initialization run is first carried out, in which the position of the adjusting element 1 is detected. For this purpose, the adjusting element 1 is rotated. During rotation the switch 23 detects the markers 6 and the initialization identifier 7. Each time the switch 23 is activated by one of the markers 6 and the initialization identifier 7, the switch 23 outputs a control signal to the control device. The duration of the control signal corresponds to the duration of the actuation the switch 23 by one of the markers 6 or the initialization identifier 7. Because of the different lengths "I", "L" of the plateaus 9, the switch 23 is activated shorter when the marker 6 passing than during the detection of the initialization identifier 7. As soon as the switch 23 signals a longer control signal after the shorter, the control device can recognize the initial identifier 7 and can start from a defined position of the adjusting element 10, as shown on this figure. Each position of the adjustment element 1 corresponds to a specific position of the multiway valve 11. Thus, each of the marker 6 has a specific function or line passage of the multiway valve 11 associated with, for example, the introduction of hot water in the brewing chamber or the supply of a steam nozzle with superheated steam. The order of these functions is stored in the control device. Starting from the position of the adjusting element 10 when the switch 23 is activated by the initialization identifier 7, each further activation of the switch 23 is assigned to a specific function by the marker 6. Each of the position can be achieved by activating the electric motor by rotation of the adjusting element 1, controlled by the control device, namely by counting the duration of the control signal and the number of changing state of the switch, counting from the initialization position, just behind the initialization identifier 7. For example the hot steam function is determined by the marker 6.6. Its position corresponds with the position of the mutual position of the ceramic discs (not shown on this figure) which one of them is driven by the adjustment element 1 with respect to the housing 12. The position when the complete overlap of the corresponding openings arranged in the ceramic discs is achieved to allow the hot steam flow through the valve is provided is achieved exactly when the switch actuator 17 is just behind the plateau 9 and the step edge 10 of the marker 6.6. Starting from the initialization position i.e. when the switch actuator 17 is just behind the plateau 9 and the step edge 10 of the initialization identifier 7, the right position of the adjustment element 1 with respect to the function of the multi-way valve 11 is done by controlling revolutions of the electric motor 14 via the control device and by comparing with stored information the number of the detected the markers 6 between the initializations position and the marker 6.6. Counting from the initializations position, after detection fifth the marker 6, namely the marker 6.5, a next a rising edge 8 of the marker 6.6 presses the switch actuator 17 what changes the state of the switch 23, and the electric motor 14 drives the adjustment element 1 till the change of the state of the switch 23, precisely when the switch actuator 17 lose abruptly the contact with the marker 6.6, what happens after passing the plateau 9 and just behind step edge 10 of the marker 6.6. The control device stores numbers of the markers 6 and their order with respect to the function of the multi-way valve 11. On the basis of the resulting data sets, the control device can determine, the point when the electric motor 14 should be off because of reaching desired position of the adjustment element 1.

Although the invention has been explained in relation to its preferred embodiment(s) as mentioned above, it is to be understood that many other possible modifications and variations can be made without departing from the scope of the present invention, which is defined in the appended claims.

### List of reference signs

1 adjustment element
2 gear wheel
3 cam wheel
4 inner side
5 protrusion
6 marker
7 initialization identifier
8 rising edge
9 plateau
10 step edge
11 multi-way valve
12 housing
13 gearbox
14 electric motor
15 worm
16 shaft
17 switch actuator
21 opening
22 water guide
23 switch, detection unit
24 terminal
I, L length of plateau 9

## Claims

1. Hot beverages machine, in particular fully automatic coffee machine for domestic purposes,
- with a heating device,
- with a brewing chamber,
- with a hot water discharge, and
- with a motor driven multi-way valve, with a driven adjustment element (1), with a plurality of markers (6) having a working areas, and which are distributed around the periphery of the adjustment element(1),
- with an initialization identifier (7) on the adjustment element (1) which differs therefrom,
- with a control device for controlling the multi-way valve,
- with a detection unit (23) which interacts with the markers (6) and which signals detected markers, and interacts with the initialization identifier (7) and it outputs a control signal which can be evaluated in the control device,
**characterized in that** the working area of at least one of the markers (6) has a cam shape profile, with a step changing cam surface, resulting in a step change of the control signal and **in that** the initialization identifier (7) and the markers (6) having a cam surface which varies in shape from a rising edge (8), then a plateau portion (9) and a step edge (10).

2. Hot beverage machine according to claim 1, **characterized by** a difference in the markers (6) from the initialization identifier (7) formed by a duration of the detection.

3. Hot beverage machine according to claim 2 with three-dimensional markers and a switch as a detection unit (23), **characterized by** a variation in the design of the markers (6) in a dimension compared with the design of the initialization identifier (7), wherein the variation can be detected by the detection unit (23).

4. Hot beverage machine according to claim 3, **characterized in that** the switch (23) comprises a switch actuator (17) which extends outward from its body, and which is actuated by the markers (6) during movement of the adjustment element (1).

5. Hot beverage machine according to claim4, **characterized by** the switch (23) as a detection device and cams both as markers (6) and also as an initialization identifier (7) and with a longer length (L) of the initialization identifier (7) in the peripheral direction of the adjustment element (1) compared with a length (I) of the markers (6).

6. Hot beverage machine according to any of claims from 4 to 5, **characterized in that** the switch (23) can take two states: open or closed, wherein changes of the state of the switch (23) is caused by actuating the switch actuator (17) by the markers (6).

7. Hot beverage machine according to any of claims 4 to 6 **characterized in that** the switch (23) takes a first state when the switch actuator (17) is in contact with the rising edge (8) or the plateau portion (9) and a second state at the step edge (10) of the markers (6) or the initialization identifier (7) because at this position abruptly loses contact with them while the adjustment element (1) is rotated.

8. Hot beverage machine according to one of the above claims, **characterized by** a device for registering a signaling duration of the detection unit (33) during the detection of a marker (6) or the initialization identifier (7).

9. Hot beverage machine according to one of the above claims, **characterized in that** the step edge (10) extends radially inwardly between the plateau portion (9) of the markers (6) and the periphery of the adjustment element (1).

10. Method for operating a hot beverage machine for domestic purposes with a heating device, with a brewing chamber, with a hot water discharge, with a control device and with a motor-driven multi-way valve comprising an adjustment element with a number of markers, wherein said markers have a cam surface which varies in shape from a rising edge (8), then a plateau portion (9) and a step edge (10) with an initialization identifier on the adjustment element which differs therefrom and a detection unit comprising a switch actuator (17) which interacts with the markers, having the following method steps:
- initialization of the hot beverage machine,
- start rotating the adjustment element with the markers,
- detecting the duration of a first actuation of the detection device by means of the marker and storing a first value therefor,
- detecting the duration of a second actuation of the detection device by means of the next one marker and storing a second value therefor,
- determining a difference between the first and the second value,
- detecting the significant difference between two values of duration of actuation of the detection device between two adjacent cams for detecting the initialization identifier,
- detecting the change in the control signal, for determining an initial position of the valve,
- as soon as a longer control signal is detected after the shorter, the control device recognizes the initial identifier,- calculating a precision position of the adjustment element using detected the initial position, detected changes in the control signal and number of the markers,
- rotating the adjustment element till the last calculated change of control signal is detected, then,
- stopping the rotation of the adjustment element when the switch actuator lose abruptly the contact with the marker after passing the plateau and just behind the step edge of the marker.

## Patentansprüche

1. Heißgetränkeautomat, insbesondere Kaffeevollautomat, für den Hausgebrauch
- mit einer Heizvorrichtung,
- mit einer Brühkammer,
- mit einer Heißwasserausgabe und
- mit einem motorbetriebenen Mehrwegeventil mit einem angesteuerten Justierelement (1) mit mehreren Markierungen (6), die Arbeitsbereiche aufweisen und um den Umfang des Justierelements (1) herum verteilt sind,
- mit einer Initialisierungskennzeichnung (7) an dem Justierelement (1), die sich davon unterscheidet,
- mit einer Steuervorrichtung zum Steuern des Mehrwegeventils,
- mit einer Erkennungseinheit (23), die mit den Markierungen (6) zusammenwirkt und erkannte Markierungen meldet und mit der Initialisierungskennzeichnung (7) zusammenwirkt und ein Steuersignal ausgibt, das in der Steuervorrichtung ausgewertet werden kann,
**dadurch gekennzeichnet, dass** der Arbeitsbereich mindestens einer der Markierungen (6) ein nockenförmiges Profil mit einer sich sprunghaft ändernden Nockenfläche aufweist, die zu einer sprunghaften Änderung des Steuersignals führt, und dass die Initialisierungskennzeichnung (7) und die Markierungen (6) eine Nockenfläche aufweisen, deren Form sich von einer ansteigenden Kante (8) über einen ebenen Abschnitt (9) bis zu einer stufenförmigen Kante (10) wandelt.

2. Heißgetränkeautomat nach Anspruch 1, **gekennzeichnet durch** einen Unterschied der Markierungen (6) zur Initialisierungskennzeichnung (7), der sich durch eine Erkennungsdauer ergibt.

3. Heißgetränkeautomat nach Anspruch 2 mit dreidimensionalen Markierungen und einem Schalter als Erkennungseinheit (23), **gekennzeichnet durch** eine Abwandlung bei der Gestaltung der Markierungen (6) bei einer Abmessung im Vergleich zur Gestaltung der Initialisierungskennzeichnung (7), wobei die Abwandlung von der Erkennungseinheit (23) erkannt werden kann.

4. Heißgetränkeautomat nach Anspruch 3, **dadurch gekennzeichnet, dass** der Schalter (23) einen Schaltaktor (17) umfasst, der von seinem Hauptteil aus nach außen verläuft und bei einer Bewegung des Justierelements (1) von den Markierungen (6) betätigt wird.

5. Heißgetränkeautomat nach Anspruch 4, **gekennzeichnet durch** den Schalter (23) als Erkennungsvorrichtung und Nocken sowohl als Markierungen (6) als auch als Initialisierungskennzeichnung (7) und mit einer im Vergleich zu einer Länge (I) der Markierungen (6) größeren Länge (L) der Initialisierungskennzeichnung (7) in Umfangsrichtung des Justierelements (1).

6. Heißgetränkeautomat nach einem der Ansprüche 4 bis 5, **dadurch gekennzeichnet, dass** der Schalter (23) zwei Zustände annehmen kann: geöffnet oder geschlossen, wobei eine Änderung des Zustands des Schalters (23) durch Betätigen des Schaltaktors (17) durch die Markierungen (6) bewirkt wird.

7. Heißgetränkeautomat nach einem der Ansprüche 4 bis 6, **dadurch gekennzeichnet, dass** der Schalter (23) einen ersten Zustand annimmt, wenn sich der Schaltaktor (17) mit der ansteigenden Kante (8) oder dem ebenen Abschnitt (9) in Kontakt befindet, und an der stufenförmigen Kante (10) der Markierungen (6) oder der Initialisierungskennzeichnung (7) einen zweiten Zustand annimmt, da er in dieser Position plötzlich den Kontakt mit ihnen verliert, wenn sich das Justierelement (1) dreht.

8. Heißgetränkeautomat nach einem der vorhergehenden Ansprüche, **gekennzeichnet durch** eine Vorrichtung zum Registrieren einer Signalgabedauer der Erkennungseinheit (33) beim Erkennen einer Markierung (6) oder der Initialisierungskennzeichnung (7).

9. Heißgetränkeautomat nach einem der vorhergehenden Ansprüche, **dadurch gekennzeichnet, dass** die stufenförmige Kante (10) zwischen dem ebenen Abschnitt (9) der Markierungen (6) und dem Umfang des Justierelements (1) radial nach innen verläuft.

10. Verfahren zum Betreiben eines Heißgetränkeautomaten für den Hausgebrauch mit einer Heizvorrichtung, mit einer Brühkammer, mit einer Heißwasserausgabe, mit einer Steuervorrichtung und mit einem motorbetriebenen Mehrwegeventil, das ein Justierelement mit einer Anzahl Markierungen umfasst, wobei die Markierungen eine Nockenfläche aufweisen, deren Form sich von einer ansteigenden Kante (8) über einen ebenen Abschnitt (9) bis zu einer stufenförmigen Kante (10) wandelt, mit einer Initialisierungskennzeichnung an dem Justierelement, die sich davon unterscheidet, und einer Erkennungseinheit, die einen Schaltaktor (17) umfasst, der mit den Markierungen zusammenwirkt, mit folgenden Verfahrensschritten:
- Initialisierung des Heißgetränkeautomaten,
- Beginnen mit dem Drehen des Justierelements mit den Markierungen,
- Erkennen der Dauer einer ersten Betätigung der Erkennungsvorrichtung mithilfe der Markierung und Speichern eines ersten Wertes dafür,
- Erkennen der Dauer einer zweiten Betätigung der Erkennungsvorrichtung mithilfe der nächsten Markierung und Speichern eines zweiten Wertes dafür,
- Bestimmen einer Differenz zwischen dem ersten und dem zweiten Wert,
- Erkennen der erheblichen Differenz zwischen zwei Werten für die Dauer einer Betätigung der Erkennungsvorrichtung zwischen zwei benachbarten Nocken zum Erkennen der Initialisierungskennzeichnung,
- Erkennen der Änderung des Steuersignals zum Bestimmen einer Ausgangsposition des Ventils,
- sobald nach dem kürzeren ein längeres Steuersignal erkannt wird, Wiedererkennen der Ausgangskennzeichnung durch die Steuervorrichtung,
- Berechnen einer Präzisionsposition des Justierelements mithilfe der erkannten Ausgangsposition, erkannter Änderungen des Steuersignals und einer Anzahl der Markierungen,
- Drehen des Justierelements, bis die letzte berechnete Änderung des Steuersignals erkannt wird, dann
- Einstellen des Drehens des Justierelements, wenn der Schaltaktor nach dem Passieren der Ebene unmittelbar nach der stufenförmigen Kante der Markierung plötzlich den Kontakt mit der Markierung verliert.

## Revendications

1. Machine à boissons chaudes, en particulier machine à café entièrement automatique pour des usages domestiques, comprenant
- un dispositif de chauffage,
- une chambre de percolation,
- une décharge d'eau chaude, et
- une vanne multivoie entraînée par un moteur, ayant un élément de réglage (1), comprenant une pluralité de marqueurs (6) avec des zones de travail et qui sont distribuées sur la périphérie de l'élément de réglage (1),
- un identificateur d'initialisation (7) sur l'élément de réglage (1) qui lui est différent,
- un dispositif de commande qui commande la vanne multivoie,
- une unité de détection (23) qui interagit avec les marqueurs (6) et qui signale les marqueurs détectés, et interagit avec l'identificateur d'initialisation (7) et il émet un signal de commande qui peut être évalué dans le dispositif de commande,
**caractérisée en ce que** la zone de travail d'au moins l'un des marqueurs (6) présente un profil en forme de came, avec une surface de came qui modifie le gradin, ce qui fait qu'on a une modification de gradin du signal de commande et **en ce que** l'identificateur d'initialisation (7) ainsi que les marqueurs (6) présentant une surface de came qui varie en forme partant d'un flanc montant (8), à une partie en plateau (9) et un flanc en gradin (10).

2. Machine à boissons chaudes selon la revendication 1, **caractérisée par** une différence dans les marqueurs (6) de l'identificateur d'initialisation (7) formée par la durée de la détection.

3. Machine à boissons chaudes selon la revendication 2 comprenant des marqueurs tridimensionnels et un commutateur en tant qu'unité de détection (23), **caractérisée par** une variation dans le design des marqueurs (6) dans une dimension comparée au design de l'identificateur d'initialisation (7), dans laquelle la variation peut être détectée par l'unité de détection (23).

4. Machine à boissons chaudes selon la revendication 3, **caractérisée en ce que** le commutateur (23) comprend un actionneur de commutateur (17) qui s'étend vers l'extérieur de son corps, et qui est actionné par les marqueurs (6) pendant le mouvement de l'élément de réglage (1).

5. Machine à boissons chaudes selon la revendication 4, **caractérisée par** le commutateur (23) en tant que dispositif de détection et des cames à la fois en tant que marqueurs (6) et également en tant qu'identificateur d'initialisation (7) et présentant une longueur plus longue (L) de l'identificateur d'initialisation (7) dans le sens de la périphérie de l'élément de réglage (1) que la longueur (I) des marqueurs (6).

6. Machine à boissons chaudes selon l'une quelconque des revendications 4 à 5, **caractérisée en ce que** le commutateur (23) peut présenter deux états : ouvert ou fermé, dans laquelle les changements de l'état du commutateur (23) sont causés par l'actionnement de l'actionneur de commutateur (17) par les marqueurs (6).

7. Machine à boissons chaudes selon l'une quelconque des revendications 4 à 6, **caractérisée en ce que** le commutateur (23) prend un premier état quand l'actionneur de commutateur (17) est en contact avec le flanc montant (8) ou la partie en plateau (9) et un deuxième état au flanc en gradin (10) des marqueurs (6) ou de l'identificateur d'initialisation (7) car à cette position il perd brutalement le contact avec eux pendant la rotation de l'élément de réglage (1).

8. Machine à boissons chaudes selon l'une des revendications ci-dessus, **caractérisée par** un dispositif enregistrant une durée de signalement de l'unité de détection (33) pendant la détection d'un marqueur (6) ou de l'identificateur d'initialisation (7).

9. Machine à boissons chaudes selon l'une des revendications ci-dessus, **caractérisée en ce que** le flanc en gradin (10) s'étend radialement vers l'intérieur entre la partie en plateau (9) des marqueurs (6) et la périphérie de l'élément de réglage (1).

10. Procédé de fonctionnement d'une machine à boissons chaudes pour des usages domestiques comprenant un dispositif de chauffage, une chambre de percolation, une décharge d'eau chaude, un dispositif de commande et une vanne multivoie entraînée par un moteur comprenant un élément de réglage avec un nombre de marqueurs, dans lequel lesdits marqueurs présentent une surface de came qui varie en forme partant d'un flanc montant (8), à une partie en plateau (9) et un flanc en gradin (10) avec un identificateur d'initialisation sur l'élément de réglage qui diffère de celui-ci et une unité de détection comprenant un actionneur de commutateur (17) qui interagit avec les marqueurs, comprenant les étapes de procédé suivantes :
- initialisation de la machine à boissons chaudes,
- démarrage de la rotation de l'élément de réglage avec les marqueurs,
- détection de la durée d'un premier actionnement du dispositif de détection au moyen du marqueur et stockage d'une première valeur à cet effet,
- détection de la durée d'un deuxième actionnement du dispositif de détection au moyen du marqueur suivant et stockage d'une deuxième valeur à cet effet,
- détermination de la différence entre la première et la deuxième valeur,
- détection de la différence pertinente entre deux valeurs de durée de l'actionnement du dispositif de détection entre deux cames adjacentes pour la détection de l'identificateur d'initialisation,
- détection du changement dans le signal de commande, pour déterminer la position initiale de la vanne,
- dès qu'un signal de commande plus long est détecté après le plus bref, le dispositif de commande reconnaît l'identificateur initial,
- calcul d'une position de précision de l'élément de réglage, utilisation de la position initiale, changements détectés dans le signal de commande et le nombre de marqueurs,
- rotation de l'élément de réglage jusqu'à la détection du dernier changement calculé du signal de commande, puis
- arrêt de la rotation de l'élément de réglage quand l'actionneur de commutateur perd brutalement le contact avec le marqueur après passage du plateau et juste après le flanc en gradin du marqueur.
